# EUROPEAN PATENT APPLICATION

(11) **EP 2 775 366 A2**
(43) Date of publication of application: **10.09.2014**
(21) Application number: 14156671.1
(22) Date of filing: 25.02.2014
(51) Int. Cl.: G05D 1/00, G08G 5/06

(54) **Autonomous aircraft guiding mobile unit**

(30) Priority: 04.03.2013 US 201313783611
(71) Applicant: Honeywell International Inc., Morristown, NJ 07962-2245 (US)
(72) Inventor: Beda, Tomas, Morristown, NJ New Jersey 07962-2245 (US); Koukol, Ondrej, Morristown, NJ New Jersey 07962-2245 (US); Marczi, Tomas, Morristown, NJ New Jersey 07962-2245 (US)
(74) Representative: Houghton, Mark Phillip

(57) **Abstract**

Embodiments of the subject application provide methods and systems for an autonomous aircraft guiding mobile unit (GMU). The GMU includes one or more light modules, one or more processing units, and one or more data storage mediums. The one or more data storage mediums include instructions which, when executed by the one or more processing units, cause the one or more processing units to receive control messages from a traffic control ground station (TCGS), the control messages assigning the GMU to an aircraft and controlling movement of the GMU and its assigned aircraft, and to provide light commands to a pilot of the assigned aircraft with the one or more light modules, the light commands directing movement of the assigned aircraft during taxiing.

## Description

### BACKGROUND

During taxi phase, aircraft are commonly directed through the airport runways and taxiways via light commands provided by ground lights located throughout the airport. In such circumstances, all aircraft movements during taxi phase are controlled by voice commands or the ground lights controlled by Air Traffic Control (ATC) or other dedicated control system. The ground lights are configured to display different colors which correspond to simple commands for a pilot, such as green for go forward and red for stop, such as in stop bar lights. The light commands are viewed by a pilot in an aircraft and the pilot controls the aircraft in accordance with the light and radio commands to direct the aircraft to the desired gate, runway entrance, or other location. The pilots also use onboard paper maps, electronic maps, or airport guidance labels for correct guidance of aircraft and their orientation on complex taxiway structure. In some cases, the complex taxiway structure can lead to incorrect decisions by a pilot, which can lead to an accident. Therefore, it is desirable to simplify aircraft guidance using less onboard and airport equipment.

The pilots communicate with the air traffic controllers that provide taxi clearance for the particular aircraft on the airport surface. The number of air traffic controllers is proportional to the number of taxiing aircraft on the airport surface, and each air traffic controller is an added expense for the airport due to the need to employ the trained air traffic controller. Moreover, the radio communication occupies the pilot which may be increased as new proposed solutions include transmission of messages via datalink between the pilots and an air traffic controller. In some instances, poor communication between an air traffic controller and a pilot can lead to a catastrophic accident.

In low-visibility operations, most airports provide follow-me services. Such follow-me services consist of a follow-me vehicle with beacons and intensive lights to lead an aircraft to a directed location. The follow-me vehicles are operated by a human to drive the vehicle and operate the lights. The human controls the follow-me vehicle in response to radio commands from the ATC for a particular airport. In such situations, the ATC simultaneously provides commences to the human driver of the follow-me vehicle and the pilots in the guided aircraft.

Using a human to operate the follow-me vehicle, however, can be costly due to the need to employ the human operators and increases the human in the loop error factor. Proposals have been developed to eliminate the human operator and us an unmanned towing vehicle. Such a solution has been tested as the TaxiBot project in Lufthansa, DE. These unmanned towing vehicles connect to an aircraft and tow the aircraft through the airport taxiways. In such proposals, however, a human operator is still required in the vehicle for checking the TaxiBot operation. Also, physical connection between the vehicle and the aircraft can lead to delays as the aircraft stops on the taxiway to permit the connection and disconnection of the TaxiBot. Another solution, known as Follow Green, uses controllable lights on the taxiway centerline to improve aircraft guiding, but such a solution has high demands on taxiway equipment.

### SUMMARY

Embodiments of the subject application provide methods and systems for an autonomous aircraft guiding mobile unit (GMU). The GMU includes one or more light modules, one or more processing units, and one or more data storage mediums. The one or more data storage mediums include instructions which, when executed by the one or more processing units, cause the one or more processing units to receive control messages from a traffic control ground station (TCGS), the control messages assigning the GMU to an aircraft and controlling movement of the GMU and its assigned aircraft, and to provide light commands to a pilot of the assigned aircraft with the one or more light modules, the light commands directing movement of the assigned aircraft during taxiing.

### DRAWINGS

Embodiments of the subject application can be more easily understood and further advantages and uses thereof more readily apparent, when considered in view of the description of the preferred embodiments and the following figures.
Figure 1 is a diagram of an example of part of a follow-me guidance system including a plurality of aircraft, each aircraft being guided by an aircraft guiding mobile unit.
Figure 2 is a block diagram of an example aircraft guiding mobile unit.
Figure 3 is a block diagram of an example traffic control ground station which coordinates and controls movement of the plurality of aircraft guiding mobile units.
Figure 4 is a flow diagram of an example method for guiding an aircraft with an aircraft guiding mobile unit.
Figures 5A-5D are example light commands that can be provided by an aircraft guiding mobile unit to a pilot of an aircraft, the examples also illustrate example identification of aircraft by the aircraft guiding mobile unit.

In accordance with common practice, the various described features are not drawn to scale but are drawn to emphasize features relevant to the present invention. Reference characters denote like elements throughout figures and text.

### DETAILED DESCRIPTION

Embodiments of the subject application provide for an autonomous aircraft guiding mobile unit (GMU). The GMU is a mobile unit configured to drive on an airport's taxiways and/or other service roads to meet and guide an aircraft to a desired location. The GMU operates without direct human control based on control messages from a traffic control ground station (TCGS). The GMU includes one or more light modules to provide light commands to a pilot of an assigned aircraft. The light commands direct a pilot of the assigned aircraft to follow the GMU, such that aircraft can be guided to the desired location.

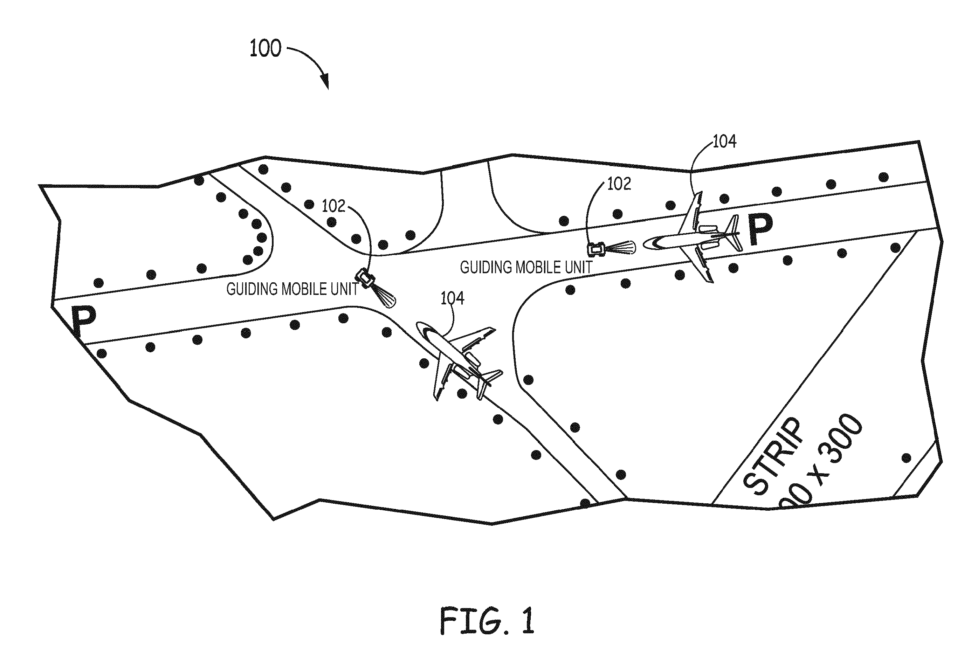

Figure 1 is a diagram of an example of part of a follow-me guidance system 100 including a plurality of such GMUs 102. A TCGS controls the operation of each of the plurality of GMUs 102. The TCGS coordinates the movement of each GMU 102 and the movement of the aircraft 104 to safely direct each aircraft 104 to an appropriate gate, runway entrance, or other location. For aircraft 104 requiring a follow-me service, the TCGS assigns a GMU 102 to the aircraft 104. The GMU 102 can drive through the airport, for example on dedicated tracks, to meet the aircraft at a pick-up location instructed by the TCGS. Once at the pick-up location, the GMU 102 can commence providing light commands to the aircraft 104 with the one or more light modules. The GMU 102 drives through the airport providing the light commands to the aircraft 104, directing the aircraft 104 to the desired location. A pilot of the aircraft 104 once in visual contact with the GMU 102 can follow the GMU 102 through the airport with the aid of the light commands provided by the GMU 102.

The TCGS can be located on the airport property, such as in a control tower of the airport. In an example, the TCGS can operate automatically, but may have a human watching the system to verify safe and appropriate operation. The TCGS and each GMU 102 can communicate using any suitable wireless communication means. In an example, the TCGS and each GMU 102 communicate over a ground control datalink. In any case, the TCGS can send command messages to each GMU 102 to control their operation. The command messages can include information such as a pick-up location for an assigned aircraft 104, a destination location for an assigned aircraft 104, and a route through the airport from the pick-up location to the destination location. In response to the command messages, the GMU 102 can drive to the pick-up location and meet the assigned aircraft 104. The GMU 102 can then provide light commands to the assigned aircraft 104 and drive the route through the airport to the destination location.

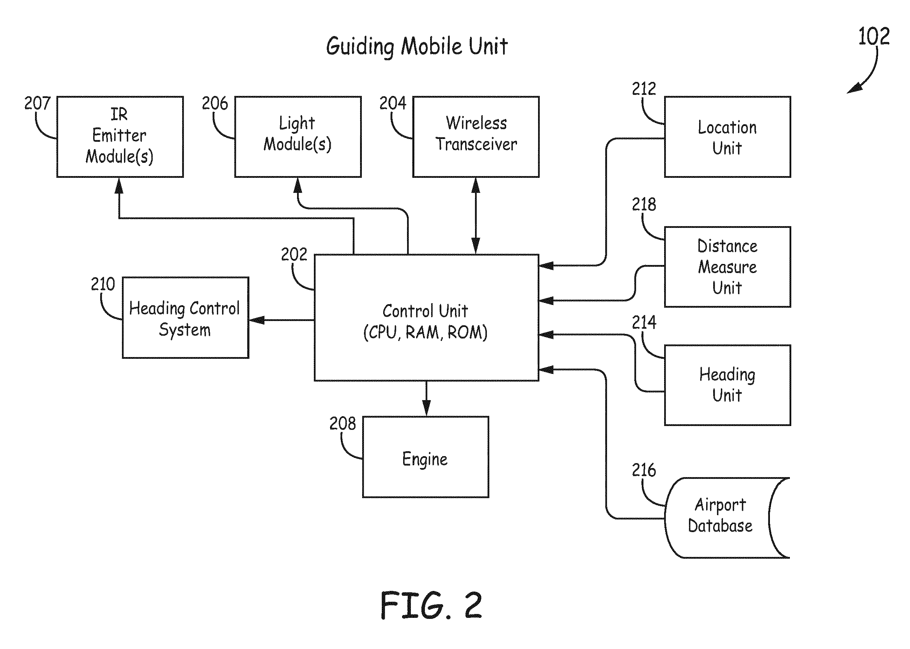

Figure 2 is a block diagram of an example GMU 102. The GMU 102 includes a control unit 202 which includes one or more processing units and one or more data storage mediums coupled thereto. The one or more processing devices can be configured to execute instructions stored (or otherwise embodied) on the one or more data storage mediums. The one or more processing units can include a general purpose processor, such as a central processing unit (CPU), or a special purpose processor. The one or more data storage mediums can include any suitable non-volatile technology such as flash memory, an optical disk, or a magnetic disk drive. The GMU 102 can also include a volatile memory that is coupled to the one or more data storage mediums for storing instructions (and related data) during execution by the one or more processing units. Memory comprises, in one implementation, any suitable form of random access memory (RAM) no known or later developed, such as dynamic random access memory (DRAM). In other implementations, other types of memory are used. The instructions, when executed by the one or more processing devices, cause the one or more processing devices, and more generally the control unit 202, to implement the functionality of the GMU 102 described herein. Since the GMU 102 does not have direct human control, the control unit 202 controls the operation of the GMU 102 in response to the command messages from the TCGS.

The control unit 202 of the GMU 102 is coupled to a wireless transceiver 204 to transmit and receive communication messages, such as the command messages, with the TCGS. The wireless transceiver 204 can comprise any suitable wireless transceiver having any suitable wireless hardware using any suitable wireless protocol on a suitable radio frequency to communicate messages with the TCGS. The control unit 202 can send messages to the wireless transceiver 204 for transmission to the TCGS and can obtain messages, such as command messages, received by the wireless transceiver 204 from the TCGS.

The control unit 202 can also be coupled to another wireless receiver to receive identification beacons that are broadcast by aircraft 104. Such identification beacons can be used to verify the identity of the aircraft 104.

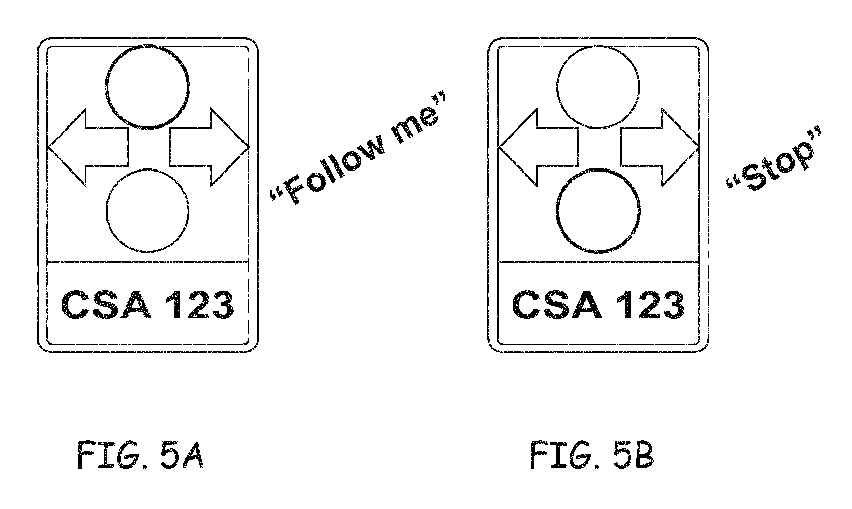

The control unit 202 is also coupled to one or more light modules 206. The one or more light modules 206 can comprise any suitable light mechanism capable of emitting light that can be viewed by a pilot of aircraft 104. For example, the one or more light modules 102 can comprise a series of lights including, but not limited to, a red, yellow, and green light to communicate light commands including, but not limited to, stop, slow, and go forward, as well as lights to indicate a left turn and a right turn. Other light commands such as a blinking red to communicate slow down and a blinking green to communicate speed up can also be used. The one or more light modules 206 can also comprise an array of lights (e.g., light emitting diodes (LEDs)) that can be controlled to illuminate lights of desired colors and/or in desired shapes to indicate the desired light command. An example of such an array is shown in Figures 5A-5D. The control unit 202 can control the one or more light modules 206 to provide appropriate light commands to a pilot of an assigned aircraft 104 in order to direct the aircraft 104 in accordance with the command messages from the TCGS.

In some examples the control unit 202 is also coupled to one or more infrared (IR) emitter modules 207. The one or more IR emitter modules 207 can be used when the one or more light modules 206 include lights having low IR emission characteristics, such as LED lights. In such circumstances, an aircraft's IR sensors (e.g., in an onboard enhanced vision system (EVS)) may not be able to pick up the IR emitted from the one or more light modules 206. As such, in extremely low visibility situations, the pilot may be unable to visually see the light from the one or more light modules 206 and the IR sensors on the aircraft may not be able to pick up the IR emissions from the one or more light modules 206 resulting in the inability of the one or more light modules 206 to provide the light commands to the pilot. In such situations, the one or more IR emitter modules 207 can be used to provide an IR command that can be sensed by the IR sensors of the aircraft, such that the pilot can receive the IR command. The IR commands can be the same as the light commands including commands to, for example, follow-me, stop, turn left, and turn right. The control unit 202 can control the one or more IR emitter modules 207 to provide appropriate IR commands to a pilot of an assigned aircraft 104 in order to direct the aircraft 104 in accordance with the command messages from the TCGS. In some examples, the one or more light modules 206 and the one or more emitter modules 207 can be used at the same time, where the light commands and IR commands can convey the same command to the pilot.

The control unit 202 is also coupled to an engine 208 and a heading control system 210. The engine 208 is configured to provide the power to drive the GMU 102 throughout the airport. As an example, engine 208 can be an internal combustion engine or an electric motor. The heading control system 210 is configured to control the direction of motion of the GMU 102. In an example, the heading control system 210 can comprise a mechanism to steer wheels of the GMU 102. The control unit 202 controls the operation of the engine 208 and the heading control system 210 to drive the GMU 102 through the airport in response to the command messages from the TCGS.

The control unit 202 can also be coupled to a location determination unit 212 and a heading determination unit 214. The location unit 212 can determine a current location of the GMU 102, and the heading determination unit 214 can determine a current heading for the GMU 102. Although illustrated as separate units, in some examples, the location and heading unit can be integrated into a single navigation unit. The control unit 202 can obtain the location and heading of the GMU 102 from the location unit 212 and the heading unit 214 and use the location and heading to determine how to control the engine 208 and the heading control system 210 to drive the GMU 102 in accordance with the command messages from the TCGS. The control unit 202 can also periodically send the location and heading of the GMU 102 to the TCGS via a message transmitted by the wireless transceiver 204. The location unit 212 can comprise a satellite navigation system receiver, such as, but not limited to, a Galileo receiver or a global position system (GPS) receiver. In an example, the heading unit 214 can comprise a magnetic sensor and/or an inertial measurement unit.

The control unit 202 can also be coupled to an airport database 216 (e.g., a map) including information on the locations of approved paths (e.g., taxiways) through the airport, as well as the locations of runways, gates, service roads, runway entrances, aprons, buildings, and any other information that may aid in driving through the airport. The airport database 216 can be stored or otherwise embodied on a data storage medium. Although illustrated as a separate block from the control unit 202, in some examples the airport database 216 can be stored on the one or more data storage mediums of the control unit 202. The control unit 202 can access the airport database 216 to determine how to control the engine 208 and the heading control system 210 to drive the GMU 102 in accordance with the command messages from the TCGS.

Finally, the control unit 202 can also be coupled to an aircraft distance measuring unit 218. The distance measuring unit 218 is configured to measure a distance between the GMU 102 and its assigned aircraft 104. The control unit 202 can obtain the distance between the GMU 102 and the assigned aircraft 104 from the distance measuring unit 218 and determine how to control the engine 208 and the heading control system 210 to maintain the distance between the GMU 102 and the assigned aircraft 104 to within a defined range during guiding of the aircraft 104. The control unit 202 can also control the one or more light modules 206 based on the distance between the GMU 102 and the assigned aircraft 104 to provide commands to a pilot of the aircraft to help maintain the distance to within a defined range. For example, the control unit 202 can provide commands to the pilot to reduce or increase the distance between the GMU 102 and the assigned aircraft 104.

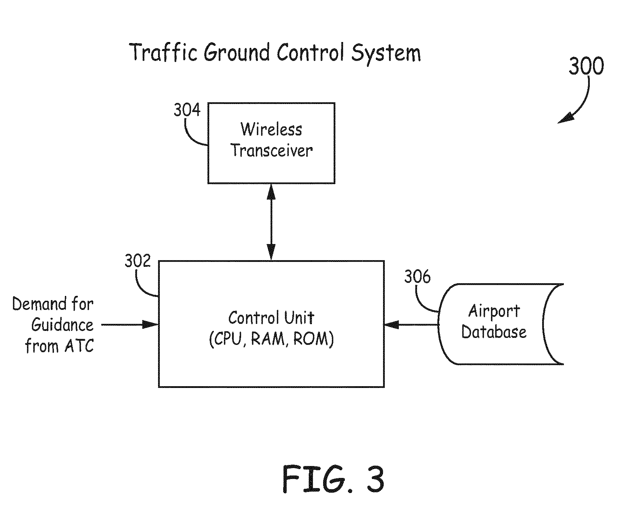

Figure 3 is a block diagram of an example TCGS 300. The TCGS 300 includes a control unit 302 which includes one or more processing units and one or more data storage mediums coupled thereto. The one or more processing devices can be configured to execute instructions stored (or otherwise embodied) on the one or more data storage mediums. The one or more processing units can include a general purpose processor, such as a central processing unit (CPU), or a special purpose processor. The one or more data storage mediums can include any suitable non-volatile technology such as flash memory, an optical disk, or a magnetic disk drive. The TCGS 300 can also include a volatile memory that is coupled to the one or more data storage mediums for storing instructions (and related data) during execution by the one or more processing units. Memory comprises, in one implementation, any suitable form of random access memory (RAM) no known or later developed, such as dynamic random access memory (DRAM). In other implementations, other types of memory are used. The instructions, when executed by the one or more processing devices, cause the one or more processing devices, and more generally the control unit 302, to implement the functionality of the TCGS described herein.

The control unit 302 is coupled to a wireless transceiver 304 to transmit and receive communication messages, such as the command messages, with each of the plurality of GMUs 102. The wireless transceiver 304 can comprise any suitable wireless transceiver having any suitable wireless hardware using any suitable wireless protocol on a suitable radio frequency to communicate messages with the GMUs 102. The control unit 302 can send messages, such as command messages, to the wireless transceiver 304 for transmission to one or more GMUs 102 and can obtain messages received by the wireless transceiver 204 from a GMU 102.

The control unit 302 can also be coupled to an airport database 306 (e.g., a map) including information on the locations of approved paths (e.g., taxiways) through the airport, as well as the locations of runways, gates, service roads, runway entrances, aprons, buildings, and any other information that may aid in driving through the airport. The airport database 306 can be stored or otherwise embodied on a data storage medium. Although illustrated as a separate block from the control unit 302, in some examples the airport database 306 can be stored on the one or more data storage mediums of the control unit 302. The control unit 302 can access the airport database 306 to determine how to control movement of the plurality of GMUs 102.

In an example, the TCGS 300 is an automated system that receives inputs as to each aircraft 104 that is in, or close to, the taxi phase at the airport including the current location, destination location, and/or route of each such aircraft 104 on the airport driving paths (e.g., taxiways). The inputs can be provided by a human operator or from another system, such an air traffic control system. The control unit 302 can also determine a current location and heading for each GMU 102 based on communication messages received from each GMU 102. Based on the information for the aircraft 104 and the information for each GMU 102, the control unit 302 can access the airport database 306 to assign a GMU 102 to any aircraft 104 desiring follow-me service, and to determine a pick-up location, route, and destination location for the GMU 102 with respect to the assigned aircraft 104. The control unit 302 can then send command messages to the wireless transceiver 304 to transmit such command messages to one or more GMUs 102 to assign such GMUs 102 to an aircraft 104 and to instruct the GMUs 102 as to the pick-up location, route, and destination location for that aircraft 104. The control unit 302 can coordinate the movement of each GMU 102 to safely direct each aircraft 104 to an appropriate gate, service road, runway entrance, or other location and to safely move the GMUs 102 about the airport paths.

In one example, the TCGS 300 can coordinate and control the movement of all aircraft 104 in the taxi phase at the airport. In such an example, the control unit 302 can access the airport database 306 to determine a route for each aircraft from its current location to its destination location. The control unit 302 can then send messages to the plurality of ground lights installed throughout the airport to provide light commands to pilots of the aircraft 104 to guide the aircraft 104 to its destination location. Such light commands may be in addition to assigning a GMU 102 to an aircraft 104.

In some examples only a subset of the aircraft 104 in taxi phase are assigned a GMU 102, such as only aircraft 104 that request a GMU 102 are assigned one. In other examples, all aircraft 104 in the taxi phase at an airport are assigned a GMU 102.

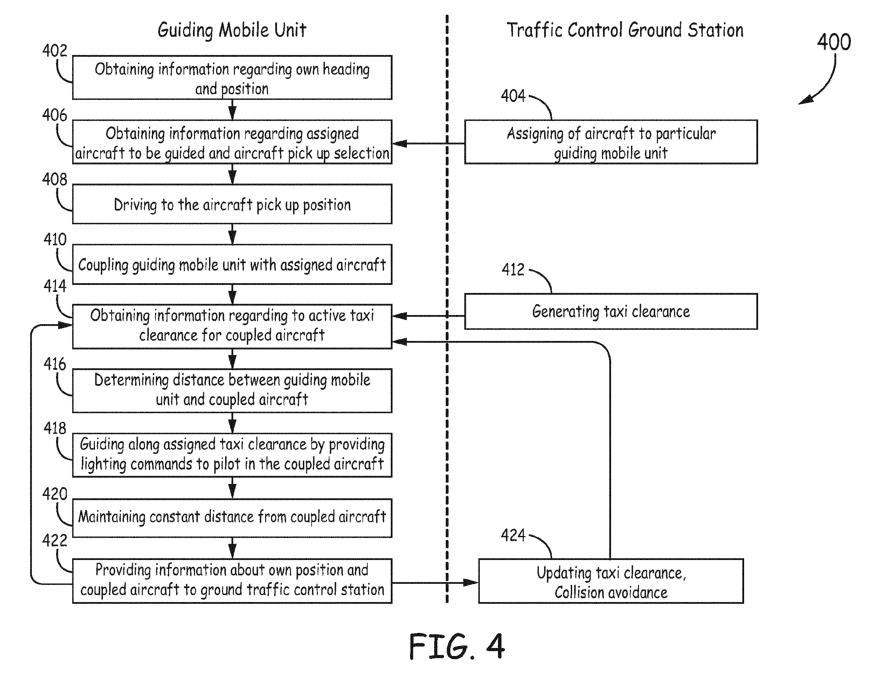

Figure 4 is an example method 400 for guiding an aircraft 104 with a GMU 102. The method 400 includes acts performed by the GMU 102 as controlled by the instructions. In particular, the instructions, when executed by the one or more processing devices of the control unit 202, cause the one or more processing devices, and more generally the control unit 202, to cause the GMU 102 to implement the acts of method 400.

The control unit 202 of the GMU 102 obtains the location and heading for the GMU 102 (block 402). In many examples, the location and heading for the GMU 102 are periodically obtained by the control unit 202 to maintain a current location and heading for the GMU 102. Based on the determinations by the control unit 302 of the TCGS 300, the TCGS 300 assigns an aircraft 104 to the GMU 102 (block 404). The TCGS 300 sends one or more control messages to the GMU 102 indicating the assigned aircraft 104 and the pick-up location for the assigned aircraft 104. The wireless transceiver 204 of the GMU 102 receives the control message(s) and the control unit 202 obtains information regarding the assigned aircraft 104 and the pick-up location from the control message(s) (block 406). Once the pick-up location is identified, the control unit 202 controls the engine 208 and the heading control system 210 to drive the GMU 102 to the pick-up location (block 408). The control unit 202 can access the airport database 216 to determine a route to the pick-up location itself, or how to follow a route provided by the TCGS 300.

Once the control unit 202 arrives at the pick-up location, the control unit 202 can determine whether the assigned aircraft 104 is at the pick-up location. If the assigned aircraft 104 is not yet at the pick-up location, the GMU 102 can wait for the assigned aircraft 104 at the pick-up location. Once an aircraft arrives at the pick-up location, the control unit 202 can virtually couple with the aircraft to verify whether that aircraft is the assigned aircraft 104 (block 410) and to initiate guiding of the aircraft. To verify that the aircraft at the pick-up location is the assigned aircraft 104, the control unit 202 can obtain identification information for the aircraft by receiving the identification beacon that is broadcast by the aircraft. The identification information from the identification beacon can be compared with identification information for the assigned aircraft 104 to verify that the aircraft is the assigned aircraft 104.

If the control unit 202 verifies that the aircraft at the pick-up location is the assigned aircraft 104, the control unit 202 can provide a light signal with the one or more light modules 206 to a pilot of the assigned aircraft 104 to indicate that the aircraft 104 has been verified, and that the aircraft 104 will be guided by the GMU 102. Such a light signal can comprise providing the follow-me light command (e.g., a green light) to the pilot of the aircraft 104. Advantageously, virtual coupling between the GMU 102 and the aircraft 104 can take place without requiring the aircraft 104 to stop moving. For example, the GMU 102 can virtually couple with the aircraft 104 as the aircraft 104 approaches the pick-up location, such that the GMU 102 can immediately begin guiding the aircraft 104 from the pick-up location to the destination location. Since the aircraft 104 is not required to stop, the throughput of the airport can be maintained at a high level.

The TCGS 300 can generate taxi clearance for the GMU 102 and the assigned aircraft 104 to route through the airport (block 412). The taxi clearance can be sent to the GMU 102 in one or more command messages from the TCGS 300. The control unit 202 of the GMU 102 can obtain the taxi clearance via receiving the control messages at the wireless receiver 204 (block 414). Such taxi clearance can include a route through the airport to the destination location for the aircraft 104. The control unit 202 can then control the engine 208 and the heading control system 210 to drive the GMU 102 along the route to the destination location (block 418). The control unit 202 can access the airport database 216 to determine a route to the pick-up location itself, or how to follow a route provided by the TCGS 300.

Before and during guiding of the aircraft 104 along the route, the control unit 202 can periodically determine the distance between the GMU 102 and the aircraft 104 using the distance measuring unit 218 (block 416). Based on the distance determined by the distance measuring unit 218, the control unit 102 can control the engine 208 and the heading control system 210 to maintain the distance between the GMU 102 and the aircraft 104 to within a defined range during guiding of the aircraft 104 (block 420). In addition, in some examples, the control unit 202 can provide light commands to the pilot of the aircraft 104 based on the distance determined by the distance measuring unit 218 to help maintain the distance between the GMU 102 and the aircraft 104 to within the defined range during guiding of the aircraft 104. Such light commands can indicate to the pilot to reduce or increase the distance between the GMU 102 and the aircraft 104.

Once the GMU 102 has virtually coupled with the aircraft 104, and the route through the airport has been obtained by the control unit 202, the GMU 102 can guide the aircraft 104 through the airport according to the route (block 418). Guiding the aircraft through the airport according to the route includes driving the GMU 102 along the route and providing light commands to the pilot of the aircraft 104, such that the pilot can follow the GMU 102 along the route. Based on the location and heading of the GMU 102 on the route, the control unit 202 can determine the appropriate light command to provide on the one or more light modules 206. For example, while the GMU 102 is driving along the route, the GMU 102 can provide a follow-me light command (e.g., a green light) to the pilot of the aircraft 104. When the GMU 102 is taking or about to take a turn, the control unit 202 can indicate the upcoming right or left turn by providing the respective right or left turn light command on the one or more light modules 206. The control unit 202 can also take other factors into account when providing the appropriate light command on the one or more light modules 206. For example, the control unit 202 can consider the distance between the GMU 102 and the aircraft 104 as discussed above, the control unit 202 can also consider the location of other aircraft 104 and the location of other GMU 102, such as when the other aircraft 104 and assigned GMU 102 will cross an intersection on the route of the GMU 102. Information on the location and heading of other aircraft 104 and/or other GMUs 102 can be sent by the TCGS 300 to the GMU 102 in one or more control messages. In an example, the TCGS 300 can periodically broadcast a message including the location of all active GMUs 102 and aircraft 104 in taxi phase on the airport. Such a broadcast message can also include the intended route, destination location, and taxi clearance for such active GMUs 102 and aircraft 104. The GMU 102 (and other GMUs 102) can receive this message and update their airport database 216 to include the information. Since all of the active GMUs 102 are updating the TCGS 300 with their respective current location and heading, the information provided by the TCGS 300 can be accurate and up-to-date.

The GMU 102 can provide a stop light command (e.g., a red light) on the one or more light modules 206 when necessary, such as prior to an upcoming intersection where another GMU 102 and aircraft 104 will be crossing the route. In any case, the control unit 202 can adjust the engine 208, heading control unit 210, and the light commands provided on the one or more light modules 206 as the GMU 102 drives along the route to guide the aircraft 104 from the pick-up location to the destination location. In examples where the GMU 102 includes one or more IR emitter modules 207, the GMU 102 can provide IR commands in the same manner as the light commands discussed herein.

The GMU 102 can also periodically send its own location and heading to the TCGS 300 in a message transmitted by the wireless transceiver 204 (block 422). This information can be used by the TCGS 300 to maintain its management of all the GMUs 102 and aircraft 104 in taxi phase. In some examples, the GMU 102 can also provide an indication of the location of the assigned aircraft 104, which can be based on, for example, the location of the GMU 102 and the distance between the GMU 102 and the aircraft 104.

If necessary, the TCGS 300 can update the taxi clearance (e.g., the route) taken by the GMU 102 and the assigned aircraft 104 to avoid collisions with other aircraft 104 and/or GMUs 102 at the airport (block 424). In such circumstances, the updated taxi clearance can be sent from the TCGS 300 to the GMU 102 in one or more control messages. As described with respect to block 414 above, the control unit 202 can then obtain the updated taxi clearance via receiving the control message(s) with the wireless receiver 204. The control unit 202 can then adjust the controls of the engine 208, heading control system 210, and light commands as necessary in blocks 416, 418, 420, and 422. Accordingly, blocks 414, 416, 418, 420, 422, and 424 can be repeated in various loops to guide the aircraft 104 to the destination location.

When a GMU 102 is not currently assigned to an aircraft 104, the GMU 102 can be directed to a holding area on the airport. The location of the holding area assigned for the GMU 102 can be provided in one or more command messages from the TCGS 300. Upon reaching a destination location with the aircraft 104, the control unit 102 can indicate to the pilot of the aircraft 104 that the GMU 102 has completed guiding of the aircraft 104. Such an indication can include, for example, turning off all lights in the one or more light modules 206. In other examples, however, other means can be used to indicate that the GMU 102 has completed guiding of the aircraft 104. Once the GMU 102 has completed guiding of the aircraft 104, the control unit 202 can control the engine 208 and the heading control system 210 to drive the GMU 102 to an assigned holding area. The assigned holding area can be a holding area previously assigned by the TCGS 300 or can be a holding area received in a control message from the TCGS 300 more recently, such as after or near the end of guiding the aircraft 104 to the destination location. The GMU 102 can then wait in the holding area until being assigned to guide another aircraft. In some examples, the GMU 102 can send a message to the TCGS 300 indicating a need to recharge or refill with fuel. Upon receiving such a message, the TCGS 300 can assign the GMU 102 to a holding area having a recharge or refill station. In some examples, the GMU 102 can automatically recharge or refill at such a station.

Such a method 400 can be implemented for each GMU 102 on the airport to guide aircraft 104 to their desired location. Since multiple aircraft 104 and GMUs 102 are likely to be operating simultaneously, the TCGS 300 can coordinate the movement of all the GMUs 102 and the aircraft 104 to ensure safe routes through the airport.

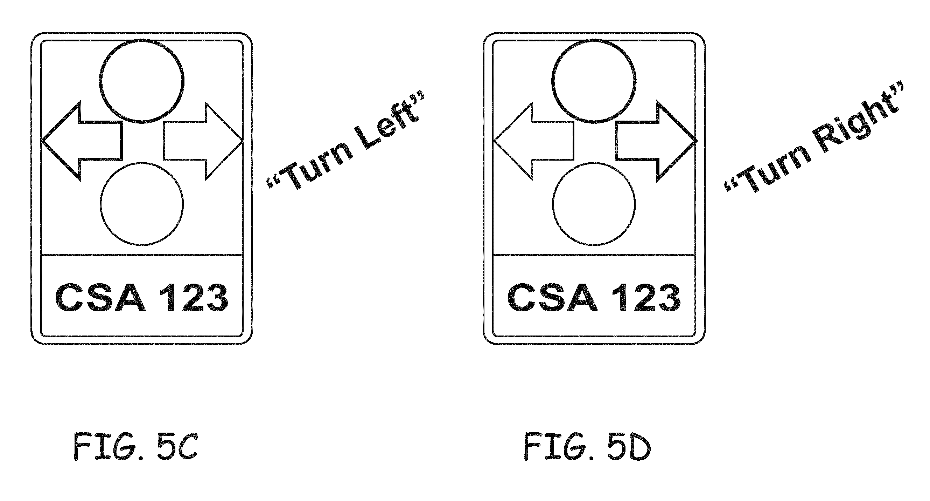

Figures 5A-5D illustrate example light commands on an example light module 206 of a GMU 102. Figure 5A illustrates an example follow-me light command, which can be a lighted green circle near the top of the lightable area of the light module 206. In some examples, the light module 206 can also include other information such as identification information for the assigned aircraft (e.g., CSA 123) and/or the destination location for the assigned aircraft 104 (e.g., gate D24). Figure 5B illustrates an example stop light command, which can be a lighted red circle near the bottom of the lightable area of the light module 206. Figure 5C illustrates an example turn left light command, which can be the lighted green circle for follow-me along with a left pointing green arrow. Figure 5D illustrates an example turn right light command, which can be the lighted green circle for follow-me along with a right pointing green arrow. In other examples, other symbols and/or lights can be used to indicate the various light commands.

Advantageously, a GMU 102 and system 100 as described where the GMU(s) 102 are autonomous, does not require human operators for each follow-me vehicle, thereby eliminating the human error factor for that activity. Additionally, if the TCGS 300 coordinates and controls the movement of all GMUs 102 and all aircraft 104 during taxi phase, and all aircraft 104 are assigned a GMU 102 during taxi phase, the amount of communication between pilots and air traffic controllers for the taxi phase can be significantly reduced or eliminated. This is because the pilot of an aircraft 104 may be able to easily identify and follow the appropriate GMU 102 to the destination location based on the easy to follow light commands from the GMU 102.

### EXAMPLE EMBODIMENTS

Example 1 includes an autonomous aircraft guiding mobile unit (GMU) comprising: one or more light modules; one or more processing units; and one or more data storage mediums, the one or more data storage mediums including instructions which, when executed by the one or more processing units, cause the one or more processing units to: receive control messages from a traffic control ground station (TCGS), the control messages assigning the GMU to an aircraft and controlling movement of the GMU and its assigned aircraft; and provide light commands to a pilot of the assigned aircraft with the one or more light modules, the light commands directing movement of the assigned aircraft during taxiing.

Example 2 includes the GMU of Example 1, wherein the light commands provided to the pilot include commands of: follow-me, stop, turn right, and turn left.

Example 3 includes the GMU of any of Examples 1 or 2, comprising: an engine for moving the GMU about an airport; and a heading control system to control a direction of motion for the GMU; wherein the instructions cause the one or more processing units to control the engine and the heading control system based on the control messages from the TCGS to guide the assigned aircraft.

Example 4 includes the GMU of Example 3, wherein the engine comprises one of an internal combustion engine or an electric motor.

Example 5 includes the GMU of any of Examples 1-4, comprising: a location unit to determine a location of the GMU; a heading unit to determine a heading of the GMU; wherein the instructions cause the one or more processing units to obtain the location and heading of the GMU from the location unit and the heading unit and provide indications of the location and heading to the TCGS.

Example 6 includes the GMU of any of Examples 1-5, wherein communication between the TCGS and the GMU occurs over a ground control datalink.

Example 7 includes the GMU of any of Examples 1-6, wherein the TCGS determines a route on airport taxiways for the GMU, wherein the control messages direct the GMU assigned to an aircraft in accordance with the route; and wherein the GMU includes an airport database indicating a location of the airport taxiways, wherein the instructions cause the one or more processing units to control the engine and the heading control system to drive the GMU over the airport taxiways in accordance with the route.

Example 8 includes the GMU of any of Examples 1-7, comprising: an aircraft distance measuring unit configured to measure a distance between the GMU and its assigned aircraft, wherein the instructions cause the one or more processing units to maintain the distance between the GMU and its assigned aircraft within a defined range.

Example 9 includes the GMU of Example 8, wherein the instructions cause the one or more processing units to send an indication of a location of the assigned aircraft to the TCGS.

Example 10 includes the GMU of any of Examples 1-9, wherein the instructions cause the one or more processing units to verify whether an aircraft is the assigned aircraft by receiving a broadcast identification beacon from the aircraft and comparing identification information in the broadcast identification beacon with identification information of the assigned aircraft.

Example 11 includes the GMU of Example 10, wherein the instructions cause the one or more processing units to, in response to verifying that the aircraft is the assigned aircraft, commence the providing light commands to the pilot.

Example 12 includes the GMU of any of Examples 1-11, comprising: one or more infrared (IR) emitter modules, wherein the instructions cause the one or more processing units to provide IR commands to a pilot of the assigned aircraft with the one or more IR emitter modules, the IR commands providing the same directives as the light commands provided to the pilot, such that the pilot can receive the directives in low visibility conditions when the light commands are not easily visible.

Example 13 includes a method for guiding an aircraft with an autonomous guiding mobile unit (GMU), the method comprising: receiving control messages including information regarding assigned aircraft and aircraft pick-up location from a traffic control ground station (TCGS); controlling, with one or more processing units, an engine and a heading control system of the GMU to driving to the aircraft pick-up location; verifying, with the one or more processing units, whether an aircraft in proximity of the aircraft pick-up location is the assigned aircraft; determining, with the one or more processing units, light commands to provide to the assigned aircraft based on the control messages from the TCGS; and providing the light commands to the assigned aircraft to guide the assigned aircraft during taxiing.

Example 14 includes the method of Example 13, comprising: maintaining a distance between the GMU and the assigned aircraft during taxiing to within a defined range.

Example 15 includes the method of any of Examples 13 or 14, wherein verifying whether an aircraft in proximity of the aircraft pick-up location is the assigned aircraft includes receiving a broadcast identification beacon from the aircraft and comparing identification information in the broadcast identification beacon with identification information of the assigned aircraft.

Example 16 includes the method of any of Examples 13-15, wherein determining light commands includes determining when to provide a follow-me, stop, turn left, and turn right command.

Example 17 includes the method of any of Examples 13-16, comprising: sending to the TCGS information regarding a location and heading of the GMU and a location of the assigned aircraft.

Example 18 includes an airport follow-me guidance system comprising: a traffic control ground station (TCGS) for directing aircraft during taxiing; and a plurality of aircraft guiding mobile units (GMUs), each GMU configured to guide an aircraft during taxiing, wherein each GMU includes: one or more light modules; one or more processing units; and one or more data storage mediums, the one or more data storage mediums including instructions which, when executed by the one or more processing units, cause the one or more processing units to: receive control messages from the TCGS, the control messages assigning the GMU to an aircraft and controlling movement of the GMU and its assigned aircraft; and provide light commands to a pilot of the assigned aircraft with the one or more light modules, the light commands directing movement of the assigned aircraft during taxiing.

Example 19 includes the follow-me guidance system of Example 18, wherein the TCGS is configured to coordinate movement of all the GMUs to safely direct aircraft to an appropriate gate, runway entrance, or other location.

Example 20 includes the follow-me guidance system of any of Examples 18 or 19, wherein each GMU includes: an engine for moving the GMU about an airport; and a heading control system to control a direction of motion for the GMU; wherein the instructions cause the one or more processing units to control the engine and the heading control system based on the control messages from the TCGS to guide the assigned aircraft.

## Claims

1. An autonomous aircraft guiding mobile unit (GMU) (102) comprising:
one or more light modules (206);
an engine (208) for moving the GMU (102) about an airport;
a heading control system (210) to control a direction of motion for the GMU (102);
one or more processing units (202); and
one or more data storage mediums (202), the one or more data storage mediums (202) including instructions which, when executed by the one or more processing units (202), cause the one or more processing units (202) to:
receive control messages from a traffic control ground station (TCGS) (300), the control messages assigning the GMU (102) to an aircraft (104) and controlling movement of the GMU (102) and its assigned aircraft (104);
provide light commands to a pilot of the assigned aircraft (104) with the one or more light modules (206), the light commands directing movement of the assigned aircraft (104) during taxiing; and
control the engine (208) and the heading control system (210) based on the control messages from the TCGS (300) to guide the assigned aircraft (104).

2. The GMU (102) of claim 1, comprising:
a location unit (212) to determine a location of the GMU (102);
a heading unit (214) to determine a heading of the GMU (102);
wherein the instructions cause the one or more processing units (202) to obtain the location and heading of the GMU (102) from the location unit (212) and the heading unit (214) and provide indications of the location and heading to the TCGS (300).

3. The GMU (102) of any of claims 1 or 2, wherein communication between the TCGS (300) and the GMU (102) occurs over a ground control datalink.

4. The GMU (102) of any of claims 1-3, wherein the TCGS (300) determines a route on airport taxiways for the GMU (102), wherein the control messages direct the GMU (102) assigned to an aircraft (104) in accordance with the route; and
wherein the GMU (102) includes an airport database indicating a location of the airport taxiways, wherein the instructions cause the one or more processing units (202) to control the engine (208) and the heading control system (210) to drive the GMU (102) over the airport taxiways in accordance with the route.

5. The GMU (102) of any of claims 1-4, comprising:
an aircraft distance measuring unit configured to measure a distance between the GMU (102) and its assigned aircraft (104), wherein the instructions cause the one or more processing units (202) to maintain the distance between the GMU (102) and its assigned aircraft (104) within a defined range.

6. The GMU (102) of claim 5, wherein the instructions cause the one or more processing units (202) to send an indication of a location of the assigned aircraft (104) to the TCGS (300).

7. The GMU (102) of any of claims 1-6, comprising:
one or more infrared (IR) emitter modules (207), wherein the instructions cause the one or more processing units (202) to provide IR commands to a pilot of the assigned aircraft (104) with the one or more IR emitter modules (207), the IR commands providing the same directives as the light commands provided to the pilot, such that the pilot can receive the directives in low visibility conditions when the light commands are not easily visible.

8. A method (400) for guiding an aircraft with an autonomous guiding mobile unit (GMU), the method comprising:
receiving control messages including information regarding assigned aircraft and aircraft pick-up location from a traffic control ground station (TCGS) (406);
controlling, with one or more processing units, an engine and a heading control system of the GMU to driving to the aircraft pick-up location (408);
verifying, with the one or more processing units, whether an aircraft in proximity of the aircraft pick-up location is the assigned aircraft (410);
determining, with the one or more processing units, light commands to provide to the assigned aircraft based on the control messages from the TCGS; and
providing the light commands to the assigned aircraft to guide the assigned aircraft during taxiing (418).

9. The method of claim 8, comprising:
maintaining a distance between the GMU and the assigned aircraft during taxiing to within a defined range (420).

10. The method of any of claims 8 or 9, wherein verifying whether an aircraft in proximity of the aircraft pick-up location is the assigned aircraft includes receiving a broadcast identification beacon from the aircraft and comparing identification information in the broadcast identification beacon with identification information of the assigned aircraft.
